# EUROPEAN PATENT SPECIFICATION

(11) **EP 2 806 747 B1**
(45) Date of publication and mention of the grant of the patent: **20.01.2016**
(21) Application number: 13702391.7
(22) Date of filing: 23.01.2013
(51) Int. Cl.: A23F 3/00, A23F 3/14, A23F 3/16

(54) **PROCESS FOR MANUFACTURING TEA PRODUCTS**
VERFAHREN ZUR HERSTELLUNG VON TEEPRODUKTEN
PROCESSUS DE FABRICATION DE PRODUITS DE THÉ

(30) Priority: 27.01.2012 EP 12152822
(43) Date of publication of application: 03.12.2014
(73) Proprietor: Unilever PLC, London, Greater London EC4Y 0DY (GB); Unilever N.V., 3013 AL Rotterdam (NL)
(72) Inventor: PATEL, Parul, Rameshchandra, Sharnbrook Bedfordshire MK44 1LQ (GB); WOOLLEY, Helen, Jane, Sharnbrook Bedfordshire MK44 1LQ (GB)
(74) Representative: Askew, Sarah Elizabeth
(86) International application number: PCT/EP2013/051215
(87) International publication number: WO 2013/110642

(56) References cited:
- WO-A1-2010/037768
- US-A1- 2009 202 676

## Description

### TECHNICAL FIELD OF THE INVENTION

The present invention relates to a process for manufacturing a tea product, in particular products containing unfermented (green) tea juice.

### BACKGROUND TO THE INVENTION

Beverages based on the tea plant (*Camellia sinensis*) have been popular throughout the world for many hundreds of years. Traditionally such beverages are produced by infusing leaf tea in hot water.

Most of the tea consumed in the Western World is so-called black tea which is obtained by harvesting leaves of the plant *Camellia sinensis* and withering, rolling, enzymatically oxidizing (fermenting), firing and sorting them. However the leaves can be processed without the fermentation step to produce what is known as green tea. Such tea is widely consumed in parts of the People's Republic of China, Japan, North Africa and the Middle East.

Green tea contains more catechins than black tea. However despite the burgeoning health consciousness amongst many consumers green tea is usually dismissed In Western countries as being too pate and unpleasant to taste. Furthermore it is typically slow to infuse and therefore not suitable for the Western desire for convenience.

Although many consumers still enjoy beverages made from leaf tea, consumers are also increasingly interested in beverages which have undergone minimal processing and have a natural image and/or contain high levels of bioactive compounds. In view of this, efforts have been made to manufacture tea products from juice expressed from tea leaves as an alternative to tea extracts.

US 2009/202676 discloses a process for manufacturing a tea product, wherein tea juice expressed from a first supply of fresh tea leaves is combined with leaf tea from a second supply of fresh tea leaves and/or with tea solids extracted from the leaf tea. WO2010/037768 discloses a process comprising expressing juice from fresh tea leaves thereby to produce tea juice. Fermentation is prevented either by subjecting the fresh tea leaves to an enzyme deactivation treatment (e.g. steaming) before pressing, or alternatively by subjecting the expressed tea juice to an enzyme deactivation step immediately after pressing. However, we have found that the tea juice produced by this process has a taste and appearance which is not optimal, and in particular is not appealing to many Western consumers. Therefore there is a need to provide improved green tea products.

### SUMMARY OF THE INVENTION

We have found that expressed green tea juices produced with and without an enzyme deactivation step have different colour and flavour characteristsics, and furthermore, that blends of these two different green tea juices result in beverages which are particularly appealing to consumers.

Accordingly, in a first aspect, the present invention provides a process for producing tea products, the process comprising the steps of:
a) expressing juice from a first supply of unfermented fresh tea leaves thereby to produce a first tea juice and a first leaf residue;
b) subjecting the first supply of fresh tea leaves and/or the first tea juice to an enzyme deactivation treatment thereby to prevent fermentation of the tea leaves and / or tea juice;
c) expressing juice from a second supply of unfermented fresh tea leaves thereby to produce a second tea juice and a second leaf residue;
d) combining the first tea juice in which the enzymes have been deactivated with the second tea juice.

In a second aspect, the present invention provides a tea product obtained and/or obtainable by this process.

In a third aspect, the present invention provides beverages obtained and/or obtainable by diluting the tea product with an aqueous liquid, preferably water.

### DETAILED DESCRIPTION

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.* "Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

As used herein the term "beverage" refers to a substantially aqueous drinkable composition suitable for human consumption.

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof. The catechins are sometimes referred to using the following shorthand notation: C for catechin, GC for gallocatechin, CG for catechin gallate, GCG for gallocatechin gallate, EC for epicatechin, EGC for epigallocatechin, ECG for epicatechin gallate, and EGCG for epigallocatechin gallate. The term "gallated catechins" is used as a generic term for CG, ECG, GCG, EGCG and mixtures thereof. The amount of gallated catechins is believed to be correlated with bitterness in green tea beverages.

"Fresh tea leaves" refers to tea leaves and/or stem that have never been dried to a water content of less than 30% by weight, and usually have a water content in the range 60 to 90%.

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the tea leaves during the expression step. However, in order to prevent significant extraction of tea solids by the solvent, the moisture content of the tea leaves during expression is that of fresh tea leaves as defined hereinabove. In other words, during the expression step, the moisture content of the fresh tea leaves is between 30 and 90% by weight, more preferably between 60 and 90%. It is also preferred that the fresh leaves are not contacted with non-aqueous solvent (e.g. alcohols) prior to or during expression, owing to the environmental & economic problems associated with such solvents.

The expression step also produces leaf residue which is separated from the tea juice, e.g. by filtering and/or centrifugation. If the amount of juice expressed is too low then it becomes difficult to separate the juice from the leaf residue and/or leads to an inefficient process. Thus it is preferred that the amount of expressed juice is at least 10 ml per kg of the fresh tea leaves, more preferably at least 25 ml, more preferably still at least 50 ml and most preferably from 75 to 600 ml. When referring to the volume of juice expressed per unit mass of tea leaves it should be noted that the mass of the tea leaves is expressed on an "as is" basis and not a dry weight basis. Thus the mass includes any moisture in the leaves.

The expression step can be achieved in any convenient way so long as it allows for separation of the tea juice from the leaf residue and results in the required quantity of juice. The machinery used to express the juice may, for example, be a hydraulic press, a pneumatic press, a screw press, a belt press, an extruder or a combination thereof.

The juice may be obtained from the fresh leaves in a single pressing or in multiple pressings of the fresh leaves. Preferably the juice is obtained from a single pressing as this allows for a simple and rapid process.

In order to minimise degradation of the valuable tea compounds, it is preferred that the expression step is performed at ambient temperature. For example, the leaf temperature may be from 5 to 40°C, more preferably 10 to 30°C.

The time and pressure used in the expression step can be varied to yield the required amount of juice. Typically the pressure applied to express the juice will range from 0.5 MPa (73 psi) to 10 MPa (1450 psi). The time over which the pressure is applied typically ranges from 1 s to 1 hour, more preferably from 10 s to 20 minutes and most preferably from 30 s to 5 minutes.

Prior to expression, the fresh tea leaves may undergo a pre-treatment including, for example, a unit process selected from maceration, withering or a combination thereof. Maceration prior to expression may help in decreasing the time and/or pressure required to express the desired quantity of juice. Macerated fresh tea leaves are referred to as "dhool".

The process of the invention comprises combining two separate green tea juices. In the first green tea juice, the enzymes have been deliberately deactivated thereby to prevent fermentation of the tea juice. In the second green tea juice, the enzymes have not been subjected to an enzyme deactivation treatment. The term "enzyme deactivation treatment" includes known treatments capable of enzyme denaturation, such as heat treatment. For the sake of clarity, the term "enzyme deactivation treatment" does not include expression as described above. Preferred enzyme deactivation treatments include steaming and / or pan-frying the fresh leaves and/or heating the tea juice in a heat exchanger, or by steam injection or other methods suitable for heating liquids.

The first juice can be produced from a first supply of unfermented fresh tea leaves in two different ways.

In the first embodiment, the fresh tea leaves are subjected to the enzyme deactivation step before the expression step. This embodiment is particularly preferred if the leaf residue is to be further processed after expression to yield a substantially unfermented tea product, i.e. if the leaf residue is to be processed to make a green tea product.

In the second embodiment, the tea juice is subjected to the enzyme deactivation step immediately following expression. In particular it is preferred that the tea juice is subjected to the enzyme deactivation step not later than 10 minutes after expression, more preferably not later than 5 minutes and most preferably not later than 1 minute. This embodiment is particularly preferred if the leaf residue is to be further processed after expression to yield an at least partially fermented tea product, i.e. if the leaf residue is to be processed to make an oolong or black tea product.

Preferably the enzyme deactivation treatment is sufficient to retain most of the catechins in the fresh leaves. In particular, it is preferred that the tea juice in which the enzymes have been deactivated comprises polyphenols and the polyphenols comprise catechins wherein the weight ratio of catechins to total polyphenols is at least 0.50:1, more preferably at least 0.60:1 and most preferably from 0.70 to 0.99:1.

We have found that green juice produced by a process including an enzyme deactivation step is very green in appearance. In particular, it looks so green that some consumers may perceive it as a product which is not natural. Furthermore, beverages produced from this green juice have a taste which is not preferred by western consumers; in particular it has a somewhat seaweedy taste.

Contrary to what might be expected, we have found that green tea juice can also be produced by expression from fresh tea leaves without needing to subject the tea leaves (before expression of the juice) or the expressed juice itself to an enzyme deactivation step. Without wishing to be limited by theory, it is believed that the expression process results in a juice in which the amount of enzyme activity is low, so that a separate enzyme deactivation step is not necessary to prevent fermentation of the juice.

The present invention provides beverages obtained and/or obtainable by diluting the tea juice with an aqueous liquid, preferably water. Since the liquid composition is typically relatively rich in tea solids, it can usually be diluted many-fold whilst still imparting tea flavour to the resulting beverage. Thus the liquid composition is preferably diluted by a factor of 5 to 50 by weight, more preferable by a factor of 10 to 40 and most preferably by a factor of 15 to 35.

We have also found that blends of the first and second green tea juices result in beverages which are particularly appealing to consumers. These beverages have a classic floral green tea taste, but with a lower perception of bitterness. They also have a lighter, more attractive, less green colour. Preferably the first and second juices are combined in a ratio of from 1:10 to 10:1 by weight, more preferably from 1:8 to 4:1, most preferably from 1:5 to 2:1.

Both the first and second green tea juices are low in gallated catechins and caffeine.

From a standpoint of microbial stability, it is preferred that the combined tea juices are packaged, i.e. contained within a sealed package. In particular the package is sealed so that it is impermeable to microbiological contaminants, by which is meant that the packaged liquid composition can be stored for at least 6 months at a temperature of 20°C without the amount of spore-forming bacteria (*Bacillus* and *Clostridia spp*) in the liquid composition increasing above 100 colony forming units (cfu) / ml. Suitable packages include bottles, cans, cartons, pouches and sachets. In a particularly preferred embodiment, the liquid composition is packaged in unit doses, wherein each unit dose is suitable for dilution to make a palatable tea beverage.

In a preferred embodiment the package is in the form of a sachet having a hollow tubular body enclosed at one end by a first transverse seal and at another end by a second transverse seal. For example the package may be a pillow-shaped or tetrahedral-shaped sachet. For pillow-shaped sachets the transverse seals are substantially parallel to each other, whilst for tetrahedral-shaped sachets the transverse seals are substantially perpendicular to each other. Most preferably the package is tetrahedral shaped as this allows for easier handling of the package. Sachets are typically formed from flexible packaging material. The most preferred packaging material is plastic-foil laminate material, especially material comprising a metal (such as aluminium) foil layer sandwiched between two or more plastic (such as polyethylene terephthalate, polyethylene, polypropylene or combinations thereof) layers.

From the point of view of food hygiene it is preferred that the tea juices and/or the package is subjected to a sanitisation step such as pasteurisation or UHT treatment. For example the liquid composition may be sanitised and the sanitised composition dosed into a previously-sanitised open chamber under sterile conditions. Additionally or alternatively the formed package may be subjected to a santisation step, for example by in-pack pasteurisation or retorting. It is believed that the sanitisation step eliminates any residual enzyme activity that there may be in the second green tea juice.

In order to maximise the efficiency of the process it is preferred that one or both of the leaf residues are not discarded but are further processed to produce a commercially viable product. In a particularly preferred embodiment, the process comprises an additional step wherein one or both of the leaf residues are processed to produce leaf tea.

If the amount of juice expressed is below 300 ml per kg of fresh leaves, the leaf residue can be processed to make leaf tea of at least conventional quality despite the fact that the leaf residue after expression has a lower overall level of tea compounds such as polyphenols and amino acids. In general, the quality of the final leaf tea (e.g. in terms of infusion performance) is better the less juice expressed. Thus it is preferred that the amount of juice expressed in step (a) is less than 300 ml per kg of tea leaves, more preferably less than 275 ml, more preferably still less than 250 ml and most preferably less than 225 ml.

The leaf residue may be processed to produce green leaf tea, black leaf tea or oolong leaf tea. In the case of oolong leaf tea and black leaf tea step, the leaf residue is at least partially fermented. The manufacturing processes of green leaf tea, black leaf tea and oolong leaf tea are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures and so it is preferred that step (d) of the process comprises drying the leaf residue at a temperature of at least 75°C, more preferably at least 90°C.

It is preferred that the leaf tea manufactured from the leaf residue is sorted, preferably after drying, to achieve a particle size of at least 35 mesh. More preferably the leaf tea is sorted to achieve a particle size of from 30 mesh to 3 mesh. Alternatively or additionally, the leaf tea may be sorted to achieve a leaf tea grade of Pekoe Fannings (PF) grade or larger, more preferably Orange Fannings (OF) or larger and most preferably Broken Orange Pekoe Fannings (BOPF) or larger.

### EXAMPLES

The invention will now be further described with reference to the following examples.

### Example 1

This Example demonstrates the production of a first (i.e. enzyme deactivated) green tea juice useful for the present invention.

Fresh Kenyan tea leaves (which had a catechin content of around 15% by dry weight) of *Camellia Sinensis* var. *assamica* were steamed for 60 seconds at ∼100°C to inactivate endogenous enzymes and thus prevent fermentation. The steamed leaves were cooled to room temperature, and then chopped using a vegetable cutter to yield chopped leaf of average size of around 0.5 to 1 cm². The chopped leaves were then pressed using a screw press (Vincent horizontal continuous press model CP4, Vincent Corp., Tampa, Florida, USA) operating with a back-pressure of 0.55 MPa. The resulting yield of juice was 50 ml/100 g leaves. The tea juice was immediately centrifuged for 20 minutes (10000 g at 3°C) and the supernatant was then filter-sterilised using a Nalgene^{™} filtration unit fitted with a 0.2 µm filter. The juice was pasteurised at 75°C for 5 minutes to ensure microbiological stablility. The juice was very green in appearance when inspected by eye.

### Example 2

This Example demonstrates the production of a second green tea juice (i.e. without an enzyme deactivation step) useful for the present invention.

Fresh tea leaves of *Camellia sinensis* var. *assamica* were withered to 73.4% moisture content. The withered tea leaves were coarsely cut, before being fed into a rotorvane and then through a CTC (cut, tear, curl) machine with the rollers set at eight teeth per inch. Immediately after cutting, the leaf was pressed using a Vincent CP12 press, operating at 12rpm with a back pressure of 0.3 MPa to produce green tea juice. The juice was centrifuged continuously at a rate of 150 litres / hour through an Alfa Laval BTPX205 disk-bowl centrifuge operating with a bowl speed of 8000 rpm at 25°C.

### Example 3

Blends of the green tea juice of example 1 (i.e. that had been steamed to deactivate the enzymes) and the green tea juice of example 2 (i.e. that was simply expressed before it had fermented) were prepared in ratios of 1:1 and 1:4 (steamed : unfermented).

Beverages were prepared from the juices by diluting 5g of juice with 200 mL of boiling water. The colours (CIE L*a*b* values) of the beverages were measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10° Observer angle.. The tea juices were filled up to the brim in a quartz cuvette of 10 mm path length which was placed in the instrument for colour measurement. The instrument was calibrated using a standard white tile (Hunterlab Duffuse/8°, mode-RSEX, Port-1" and area- large) in accordance with the instruction manual. The L*a*b* values were measured at room temperature (∼25°C). Larger negative a* values represent greater greenness (lower redness) and higher b* values represent greater yellowness (lower blueness). The results are shown in Table 1.

**Table 1**

| | L | a | b |
|---|---|---|---|
| First (steamed) juice | 90.74 | -11.42 | 28.62 |
| Second (unfermented) juice | 83.49 | -8.27 | 34.04 |
| First / Second = 1:1 | 87.03 | -10.54 | 32.06 |
| First / Second = 4:1 | 85.05 | -9.63 | 33.2 |

The data show that the beverage prepared from the first (steamed) juice had the most negative a value and the lowest b value, i.e. it was the greenest. The beverage prepared from the second (unfermented) juice was much less green.

The beverages prepared from the blends had values between those of the beverages prepared from the first and second juices. Thus, by combining the first and second juices, beverages which are less green than beverages prepared from the steamed juice alone can be prepared. These are more appealing to western consumers.

The beverages produced from the combined juices were tasted and found to have a classic floral green tea taste, but with a lower perception of bitterness than conventional green tea beverages prepared by infusion. The amounts of gallated catechins were measured, and found to be lower than in conventional green tea beverages prepared by infusion.

## Claims

1. A process for producing tea products, the process comprising the steps of:
a) expressing juice from a first supply of unfermented fresh tea leaves thereby to produce a first tea juice and a first leaf residue;
b) subjecting the first supply of fresh tea leaves and/or the first tea juice to an enzyme deactivation treatment thereby to prevent fermentation of the tea leaves and / or tea juice;
c) expressing juice from a second supply of unfermented fresh tea leaves thereby to produce a second tea juice and a second leaf residue;
d) combining the first tea juice in which the enzymes have been deactivated with the second tea juice.

2. A process according to claim 1 wherein the first and second tea juices are combined in a ratio of from 1:10 to 10:1 by weight.

3. A process according to claim 2 wherein the ratio of the first and second tea juices is from 1:8 to 4:1.

4. A process according to claim 3 wherein the ratio of the first and second tea juices is from 1:5 to 2:1.

5. A process according to any one of claims 1 to 4 wherein the first supply of fresh tea leaves is subjected to the enzyme deactivation step before expressing juice from them.

6. A process according to claim 5 wherein the enzyme deactivation treatment is a heat treatment.

7. A process according to claim 6 wherein the heat treatment comprises steaming and / or pan-frying the fresh leaves.

8. A process according to any one of claims 1 to 5 wherein the first tea juice is subjected to the enzyme deactivation step following step a).

9. A process according to claim 8 wherein the first tea juice is subjected to the enzyme deactivation step not later than 10 minutes after step a).

10. A process according to claim 8 or claim 9 wherein the enzyme deactivation treatment is a heat treatment.

11. A process according to claim 10 wherein the heat treatment comprises heating the tea juice in a heat exchanger and / or steam injection.

12. A process according to any one of the preceding claims wherein the process additionally comprises subjecting the tea juices to a sanitisation step.

13. A process according to claim 12 wherein the sanitisation step is pasteurisation or UHT treatment.

14. A tea product obtainable by the process of any one of the preceding claims.

15. A beverage obtainable by diluting the tea product of claim 14 with an aqueous liquid.

## Patentansprüche

1. Verfahren zum Herstellen von Teeprodukten, wobei das Verfahren umfasst die Schritte:
a) Auspressen von Saft aus einem ersten Vorrat von unfermentierten frischen Teeblättern, um dadurch einen ersten Teesaft und einen ersten Blattrückstand herzustellen,
b) Unterwerfen des ersten Vorrats von frischen Teeblättern und/oder des ersten Teesaftes einer Behandlung zur Enzymdeaktivierung, um dadurch Fermentierung der Teeblätter und/oder des Teesafts zu verhindern,
c) Auspressen von Saft aus einem zweiten Vorrat von unfermentierten frischen Teeblättern, um dadurch einen zweiten Teesaft und einen zweiten Blattrückstand herzustellen,
d) Vereinigen des ersten Teesafts, bei welchem die Enzyme deaktiviert wurden, mit dem zweiten Teesaft.

2. Verfahren gemäß Anspruch 1, wobei der erste und der zweite Teesaft in einem Gewichtsverhältnis von 1:10 bis 10:1 vereinigt werden.

3. Verfahren gemäß Anspruch 2, wobei das Verhältnis des ersten und des zweiten Teesafts von 1:8 bis 4:1 ist.

4. Verfahren gemäß Anspruch 3, wobei das Verhältnis des ersten und des zweiten Teesafts von 1:5 bis 2:1 ist.

5. Verfahren gemäß irgendeinem der Ansprüche 1 bis 4, wobei der erste Vorrat frischer Teeblätter dem Schritt der Enzymdeaktivierung unterworfen wird, bevor aus ihnen Saft gepresst wird.

6. Verfahren gemäß Anspruch 5, wobei die Behandlung zur Enzymdeaktivierung eine Wärmebehandlung ist.

7. Verfahren gemäß Anspruch 6, wobei die Wärmebehandlung Dämpfen und/oder Anbraten der frischen Blätter umfasst.

8. Verfahren gemäß irgendeinem der Ansprüche 1 bis 5, wobei der erste Teesaft folgend Schritt a) dem Schritt der Enzymdeaktivierung unterworfen wird.

9. Verfahren gemäß Anspruch 8, wobei der erste Teesaft nicht später als 10 Minuten nach Schritt a) dem Schritt der Enzymdeaktivierung unterworfen wird.

10. Verfahren gemäß Anspruch 8 oder Anspruch 9, wobei die Behandlung zur Enzymdeaktivierung eine Wärmebehandlung ist.

11. Verfahren gemäß Anspruch 10, wobei die Wärmebehandlung das Erwärmen des Teesafts in einem Wärmeaustauscher und/oder Dampfeinspritzung umfasst.

12. Verfahren gemäß irgendeinem der vorhergehenden Ansprüche, wobei das Verfahren zusätzlich umfasst, die Teesäfte einem Desinfektionsschritt zu unterwerfen.

13. Verfahren gemäß Anspruch 12, wobei der Desinfektionsschritt Pasteurisierung oder UHT-Behandlung ist.

14. Teeprodukt, erhältlich nach dem Verfahren gemäß irgendeinem der vorhergehenden Ansprüche.

15. Getränk, erhältlich durch Verdünnen des Teeproduktes gemäß Anspruch 14 mit einer wässrigen Flüssigkeit.

## Revendications

1. Procédé de production de produits de thé, le procédé comprenant les étapes consistant :
a) à exprimer du jus à partir d'une première alimentation en feuilles de thé fraîches non fermentées pour produire par-là un premier jus de thé et un premier résidu de feuilles ;
b) à soumettre la première alimentation en feuilles de thé fraîches et/ou le premier jus de thé à un traitement de désactivation d'enzyme pour éviter par-là une fermentation des feuilles de thé et/ou du jus de thé ;
c) à exprimer du jus à partir d'une seconde alimentation en feuilles de thé fraîches non fermentées pour produire par-là un second jus de thé et un second résidu de feuilles ;
d) à combiner le premier jus de thé dans lequel les enzymes ont été désactivées avec le second jus de thé.

2. Procédé selon la revendication 1, dans lequel les premier et second jus de thé sont combinés dans un rapport de 1:10 à 10:1 en poids.

3. Procédé selon la revendication 2, dans lequel le rapport des premier et second jus de thé est de 1:8 à 4:1.

4. Procédé selon la revendication 3, dans lequel le rapport des premier et second jus de thé est de 1:5 à 2:1.

5. Procédé selon l'une quelconque des revendications 1 à 4, dans lequel la première alimentation en feuilles de thé fraîches est soumise à l'étape de désactivation d'enzyme avant l'expression de jus à partir de celle-ci.

6. Procédé selon la revendication 5, dans lequel le traitement de désactivation d'enzyme est un traitement thermique.

7. Procédé selon la revendication 6, dans lequel le traitement thermique comprend un traitement à la vapeur d'eau et/ou une friture à la poêle des feuilles fraîches.

8. Procédé selon l'une quelconque des revendications 1 à 5, dans lequel le premier jus de thé est soumis à l'étape de désactivation d'enzyme après l'étape a).

9. Procédé selon la revendication 8, dans lequel le premier jus de thé est soumis à l'étape de désactivation d'enzyme pas plus de 10 minutes après l'étape a).

10. Procédé selon la revendication 8 ou la revendication 9, dans lequel le traitement de désactivation d'enzyme est un traitement thermique.

11. Procédé selon la revendication 10, dans lequel le traitement thermique comprend le chauffage du jus de thé dans un échangeur de chaleur et/ou une injection de vapeur d'eau.

12. Procédé selon l'une quelconque des revendications précédentes, dans lequel le procédé consiste de plus à soumettre les jus de thé à une étape de désinfection.

13. Procédé selon la revendication 12, dans lequel l'étape de désinfection est une pasteurisation ou un traitement UHT.

14. Produit de thé pouvant être obtenu par le procédé selon l'une quelconque des revendications précédentes.

15. Boisson pouvant être obtenue par dilution du produit de thé selon la revendication 14 avec un liquide aqueux.
